Europäisches Patentamt

European Patent Office

Office européen des brevets

(11) Numéro de publication: **0 392 957**
**A2**

## DEMANDE DE BREVET EUROPEEN

(21) Numéro de dépôt: **90500040.2**

(22) Date de dépôt: **11.04.90**

(51) Int. Cl.⁵: **B60S 1/48**

(30) Priorité: **14.04.89 ES 8901323**

(43) Date de publication de la demande:
**17.10.90 Bulletin 90/42**

(84) Etats contractants désignés:
**AT BE CH DE DK FR GB GR IT LI LU NL SE**

(71) Demandeur: **Rubis Sala, Domingo**
**Carretera Callus n. 18**
**E-08251 Santpedor (Barcelona)(ES)**

(72) Inventeur: **Rubis Sala, Domingo**
**Carretera Callus n. 18**
**E-08251 Santpedor (Barcelona)(ES)**

(74) Mandataire: **Manresa Val, Manuel**
**Gerona n. 34**
**E-08010 Barcelona(ES)**

(54) **Installation pour éliminer le givre sur des pare-brises de véhicules à moteur à combustion et à explosion refroidi par eau.**

(57) Elle consiste en une conduite qui, à partir d'une dérivation (11) faite dans le conduit (12) de sortie d'eau chauffée par le moteur (1) du véhicule, amène cette eau aux goupillons (8) du pare-brise, une electrovalve (15) lui ayant été intercalée ainsi qu'une électropompe (14), leur ouverture et activation respectives permettant d'amener l'eau chauffée aux goupillons; la soupape de retenue à trois voies (13) pendant ce temps conserve fermée la voie qui vient du réservoir (9) de liquide de nettoyage.

Applicable aux véhicules à moteur à combustion et à explosion refroidi par eau.

EP 0 392 957 A2

# INSTALLATION POUR ELIMINER LE GIVRE SUR DES PARE-BRISES DE VEHICULES A MOTEUR A COMBUSTION ET A EXPLOSION REFROIDI PAR EAU

L'objet du présent brevet concerne une installation pour éliminer le givre sur les pare-brises de véhicules, qui vient résoudre le problème créé sur lesdits pare-brises après avoir laissé le véhicule pendant un certain temps aux intempéries, dans des régions et saisons froides. En effet, dans ces circonstances il arrive, lorsqu'on se sert du véhicule, que l'on trouve le pare-brise couvert de givre qu'il faut éliminer, mais on ne peut pas le faire simplement avec les balais ou essuie-glaces incorporés; il faut avoir recours à des méthodes manuelles et primitives, plus expéditives mais aussi plus ennuyeuses.

La présente installation consiste en prendre de l'eau chaude du circuit de réfrigération du moteur du véhicule et l'envoyer aux goupillons du pare-brise, avec les accessoires correspondants tels que dérivations, électropompes, électrovalves, etc. pour sa réalisation. Lorsqu'on fait démarrer le moteur du véhicule, évidemment il y a de l'eau chaude qui, versée sur le pare-brise avec lesdits goupillons, fond le givre qui y est déposé, une opération qui est complétée et rendue plus rapide en utilisant les essuie-glaces.

Afin de faciliter l'explication, une feuille de dessins est annexée à cette description dans laquelle il est fait le schéma de la présente installation incorporée au circuit de circulation de l'eau de réfrigération du moteur.

Dans cette figure on peut apprécier principalement: le bloc moteur -1- d'un véhicule avec sa pompe à eau -2-, le carburateur -3-, le radiateur du moteur -4- avec thermostat -5- et le vase d'expansion du réfrigérant -6- et le radiateur de chauffage -7-, par ailleurs on peut observer les goupillons -8- du pare-brise et le réservoir du liquide -9- de nettoyage de celui-ci avec l'organe poussoir habituel -10-.

Comme il est conventionnel, la pompe -2- fait circuler l'eau chauffée dans le moteur -1- vers le carburateur -3- et le radiateur de chauffage -7- jusqu'à ce qu'elle arrive à la température d'environ 85 degrés C et le thermostat -5- s'ouvre, en passant à dissiper sa chaleur dans le radiateur -4 en retournant après au moteur -1-pour y accomplir à nouveau sa mission refroidissante.

Dans la présente invention il est fondamental de disposer un "T" ou dérivation -11- dans la conduite d'eau chauffée par le moteur avant l'ouverture du thermostat -5-, par exemple, dans le conduit -12- qui va au radiateur de chauffage -7-, qui porte une soupape de retenue à trois voies -13- qui a son tour communique d'une part avec les goupillons -8- du pare-brise et de l'autre, avec le réservoir de liquide -9- de nettoyage du pare-brise.

Entre ladite dérivation -11- et la soupape de retenue -13- une électropompe -14- est intercalée pour activer la circulation de l'eau chaude vers les goupillons -8-. Et comme le circuit fermé de refroidissement de l'eau se trouve normalement sous une pression d'environ 1,6 bars, pour permettre que l'eau arrive à 140 degrés C sans bouillir, il est intercalé une électrovalve -15-qui reste fermée lorsque la pompe -14- ne fonctionne pas. Ladite électrovalve -15- peut être incorporée dans cette même électropompe -14-.

Logiquement, lorsqu'on allume le moteur du véhicule et on le laisse au ralenti un peu accéléré, on obtient, dans la conduite -12- de sortie du moteur, de l'eau chaude dont la température dépend du temps de fonctionnement, mais qui à, par exemple, 25 degrés C est déjà suffisante pour opérer la fonction de dégivrage. Dans ces conditions donc, lorsqu'on branche la commande ou interrupteur -16- du tableau de bord -17- on donne du courant à l'électrovalve -15- qui s'ouvre et à l'électropompe -14- qui pousse l'eau chaude vers les goupillons -8-. Pendant ce temps, la soupape de retenue -13- retient fermée la voie qui vient du réservoir -9-. Il es prévu un détecteur de niveau -18- du vase d'expansion -6- de sorte que lorsque le réfrigérant descend au-dessous du minimum, le relais commutateur -19- ouvre le circuit électrique de l'électrovalve -15-et de l'électropompe -14- en en empêchant leur fonctionnement, en évitant une consommation excessive, et donc dangereuse, de liquide réfrigérant.

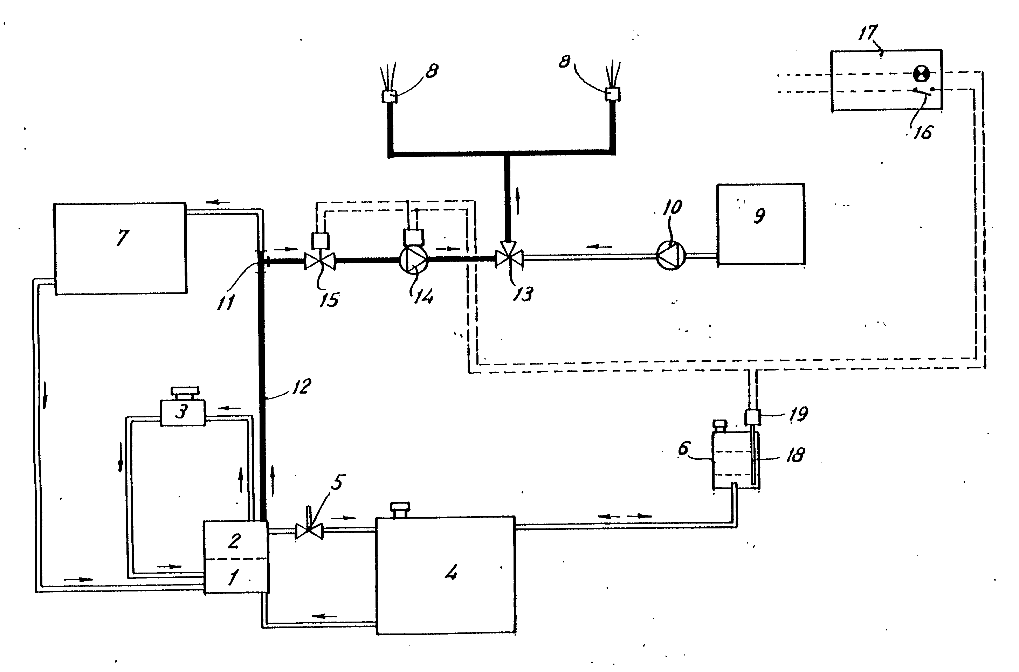

## Revendications

1.- Installation pour éliminer le givre sur les parebrises de véhicules à moteur à combustion et explosion refroidi par eau, caractérisée essentiellement en ce qu'elle consiste en une conduite qui porte l'eau chauffée par le bloc moteur, de la dérivation faite, dans un conduit de sortie de la pompe à eau du moteur vers les goupillons du pare-brise, une électrovalve ayant été intercalée qui selon si elle est branchée ou pas permet ou ferme le passage d'eau chaude à la conduite, une électropompe qui lorsqu'elle est branchée pousse l'eau chaude vers les goupillons et une soupape de retenue à trois voies interposée entre le tronçon de conduit provenant de l'électropompe, le tronçon qui va aux goupillons et le tronçon qui vient du réservoir conventionnel de liquide de nettoyage du pare-brise, ledit dernier tronçon conservera ladite soupape de retenue fermée lorsque cette électrovalve est ouverte et l'électropompe fonctionne, lesdites électrovalve et électropompe étant alimentées par un circuit électrique commandé par un interrupteur.

2.- Installation selon la revendication 1, caractérisée en ce que l'électrovalve et l'électropompe sont intégrées dans un seul ensemble.

3.- Installation selon les revendications précédentes caractérisée en ce que un relais commutateur est prévu, annexé à un détecteur de niveau du vase d'expansion du liquide réfrigérant du moteur, ce relais ouvrant le circuit électrique de l'électrovalve et de l'électropompe lorsque ledit liquide descend au-dessous du minimum.